# EUROPEAN PATENT SPECIFICATION

(11) **EP 3 376 795 B1**
(45) Date of publication and mention of the grant of the patent: **08.01.2020**
(21) Application number: 18152260.8
(22) Date of filing: 14.11.2013
(51) Int. Cl.: H04W 48/08, H04W 88/08, H04W 28/02

(54) **CONGESTION CONTROL METHOD, APPARATUS, AND SYSTEM**
ÜBERLASTUNGSSTEUERUNGSVERFAHREN, -VORRICHTUNG UND -SYSTEM
PROCÉDÉ, APPAREIL ET SYSTÈME DE CONTRÔLE DE CONGESTION

(43) Date of publication of application: 19.09.2018
(62) Divisional of application: 13897406.8
(73) Proprietor: HUAWEI TECHNOLOGIES CO., LTD., Guangdong 518129 (CN)
(72) Inventor: WANG, Shuo, Shenzhen, Guangdong 518129 (CN); YU, Yijun, Shenzhen, Guangdong 518129 (CN)
(74) Representative: Gill Jennings & Every LLP

(56) References cited:
- WO-A1-2012/109951
- VODAFONE: "Proposed new requirement for the provision of a MVNO Identifier", 3GPP DRAFT; S1-051115, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. Los Angeles, CA, USA; 20051020, 20 October 2005 (2005-10-20), XP050224149,
- "3rd Generation Partnership Project; Technical Specification Group SA; Study on RAN Sharing Enhancements (Release 12)", 3GPP DRAFT; TR22 852 V1.4.0 FS_RSE (REVISIONS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 13 May 2013 (2013-05-13), XP050707821, Retrieved from the Internet: URL:http://www.3gpp.org/ftp/tsg_sa/WG1_Ser v/TSGS1_62_New_Delhi/docs/ [retrieved on 2013-05-13]
- "3rd Generation Partnership Project; Technical Specification Group Services and System Aspects; Feasibility study on user plane congestion management (Release 12)", 3GPP DRAFT; 22805-C10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 14 December 2012 (2012-12-14), XP050916268, Retrieved from the Internet: URL:http://www.3gpp.org/ftp/Specs/zItuInfo /M.2012-2/2014-12/Rel-12/22_series/ [retrieved on 2012-12-14]

## Description

### TECHNICAL FIELD

Aspects of the present disclosure relate to the field of communications technologies, and in particular, to a congestion control method, an apparatus, and a system.

### BACKGROUND

As an opening pattern of a global telecommunications market forms, operator competition focuses on a contest for users, and therefore, a better service and more colorful business become weights in operator competition. Network investment is main expenditure of an operator; especially in a current situation in which mobile network traffic surges, an operator of a traditional mobile network needs to invest a huge amount of money to build and upgrade the network. In contrast, a pattern that a service can be launched by renting a network has an advantage of reducing investment costs. Appearance of a mobile virtual network operator (Mobile Virtual Network Operator, MVNO for short) provides a new pattern for network operation. The MVNO generally refers to an operator who has no operation license or whose development scale is limited and who needs to develop a user and provide a service for the user by using a network of an existing basic mobile network operator (Mobile Network Operator, MNO for short). A mobile network operator that has an operation license may also develop a user and provide a service by renting a network of another mobile network operator (which is also generally referred to as network sharing), and may also be considered as an MVNO. In a mature telecommunications market, increasing MVNOs appear.

With introduction of the MVNO, a network of an MNO may serve multiple MVNOs, and the MNO needs to manage network resources well for different MVNOs. For example, different radio access resources, maximum user quantities, maximum bearer (Bearer)/Packet Data Protocol (Packet Data Protocol, PDP for short) resources, and available services are allocated to different MVNOs. The network resource may be represented by a number, for example, a maximum user quantity of an MVNO is 1000; or may be represented by a resource occupation ratio, for example, an MVNO may use 40% radio access resources of a mobile network. The MNO manages and controls network resources of different MVNOs according to the foregoing network resource management method, so as to ensure that all served MVNOs have sufficient available network resources. However, when a quantity of used resources an MVNO reaches a preset value (maximum data, a maximum percentage, or the like), congestion occurs when the MVNO uses network resources. The congestion may be that excessive access user equipment (User Equipment, UE for short) of one or more MVNOs occupies excessive resources, but resource use of another MVNO is normal; or the congestion may be device congestion that occurs in network devices because UE of all MVNOs occupies excessive resources. How to perform corresponding congestion control for different MVNOs is a to-be-resolved problem.

An existing solution is: a radio access network (Radio access network, RAN for short) node reports cell congestion information to a core network device, where the congestion information may include an cell ID (cell ID) of a congested cell; after receiving the congestion information, the core network device performs uniform congestion control on the entire cell, for example, instructs a policy and charging rules function (Policy and Charging Rule Function, PCRF for short) entity or a service server to reduce sent data packets or reduce quality of service (QoS), so as to reduce resource occupation by UE in the congested cell. However, in the foregoing method, an MVNO that occupies a few resources or an MNO that provides a service may be restricted, resulting in that UE of the MVNO that occupies a few resources or of the MNO that provides a service cannot make full use of resources, and that congestion control efficiency is low.

WO 2012/109951 relates to method and system for controlling access to shared network. VODAFONE: "Proposed new requirement for the provision of a MVNO Identifier",3GPP DRAFT; S1-051115, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX; FRANCE, SA WG1, Los Angeles, CA, USA; 20051020, 20 October 2005 relates to proposed new requirement for the provision of a MVNO identifier.

### SUMMARY

The present invention is defined by the independent claims. Further embodiments are defined by the dependent claims.

Aspects of the present disclosure provide a congestion control method, an apparatus, and a system, which can perform congestion control by distinguishing different involved operators, and implement precise and efficient congestion control on a specific congestion object for a specific congestion cause.

Various aspects of the present disclosure have been defined in the independent claims. Further technical features of each of these aspects have been defined in the respective dependent claims.

According to the congestion control method, the apparatus, and the system that are provided in the aspects of the present disclosure, a core network device receives a congestion notification message sent when a RAN device detects that congestion occurs on one or more involved operators, where the congestion notification message includes an identifier of the involved operator on which congestion occurs; and performs, according to the congestion notification message, congestion control on the involved operator corresponding to the identifier of the involved operator. Therefore, congestion control can be performed by distinguishing different involved operators, precise and efficient congestion control is implemented on a specific congestion object for a specific congestion cause, and in addition, a connection quantity resource and a bandwidth resource of an involved operator on which no congestion occurs are protected.

### BRIEF DESCRIPTION OF DRAWINGS

To describe the technical solutions in the aspects of the present disclosure or in the prior art more clearly, the following briefly introduces the accompanying drawings required for describing the aspects or the prior art. Apparently, the accompanying drawings in the following description show some aspects of the present disclosure, and persons of ordinary skill in the art may still derive other drawings from these accompanying drawings without creative efforts.
FIG. 1 is a flowchart of Aspect 1 of a congestion control method according to the present disclosure;
FIG. 2 is a flowchart of Aspect 2 of a congestion control method according to the present disclosure;
FIG. 3 is a signaling interworking diagram of Aspect 3 of a congestion control method according to the present disclosure;
FIG. 4 is a signaling interworking diagram of Aspect 4 of a congestion control method according to the present disclosure;
FIG. 5 is a signaling interworking diagram of Aspect 5 of a congestion control method according to the present disclosure;
FIG. 6 is a signaling interworking diagram of Aspect 6 of a congestion control method according to the present disclosure;
FIG. 7 is a schematic structural diagram of Aspect 1 of a core network device according to the present disclosure;
FIG. 8 is a schematic structural diagram of Aspect 1 of a RAN device according to the present disclosure;
FIG. 9 is a schematic structural diagram of Aspect 2 of a core network device according to the present disclosure; and
FIG. 10 is a schematic structural diagram of Aspect 2 of a RAN device according to the present disclosure.

### DESCRIPTION OF ASPECTS

To make the objectives, technical solutions, and advantages of the aspects of the present disclosure clearer, the following clearly and completely describes the technical solutions in the aspects of the present disclosure with reference to the accompanying drawings in the aspects of the present disclosure. Apparently, the described aspects are some but not all of the aspects of the present disclosure. All other aspects obtained by persons of ordinary skill in the art based on the aspects of the present disclosure without creative efforts shall fall within the protection scope of the present disclosure.

An aspect of the present disclosure provides a congestion control method, which can implement that: in a scenario in which an operator subscribes to multiple virtual operators and congestion occurs in a radio access network (Radio access network, RAN for short) device, congestion situations of different MVNOs are relieved according to different congestion types, and a connection quantity resource and a bandwidth resource of an MVNO on which no congestion occurs are protected; in addition, precise control in a multi-MVNO status is also implemented.

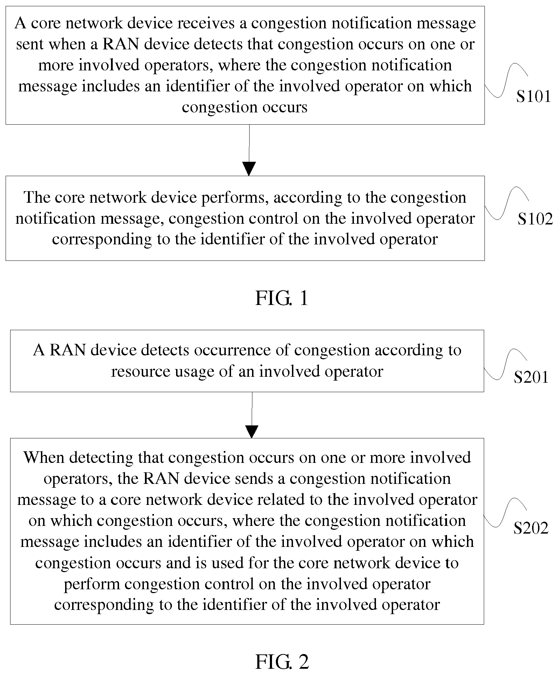

FIG. 1 is a flowchart of Aspect 1 of a congestion control method according to the present disclosure. That this aspect is executed by a core network device is used as an example for description. The core network device in this aspect includes devices that support different access technologies on a 3GPP network, including: a mobility management device such as a serving GPRS support node (Serving GPRS Support Node, SGSN for short) that supports 2G/3G network access, a mobility management entity (Mobility Management Entity, MME for short) that supports 4G network access, or a 4G-SGSN, and a gateway device such as a gateway GPRS support node (Gateway GPRS Support Node, GGSN for short), a serving gateway (Serving Gateway, S-GW for short), or a packet data network gateway (Packet Data Network Gateway, P-GW for short).

As shown in FIG. 1, the method in this aspect may include the following steps:
S101. The core network device receives a congestion notification message sent when a RAN device detects that congestion occurs on one or more involved operators, where the congestion notification message includes an identifier of the involved operator on which congestion occurs.

The involved operator is an operator that shares an operator network or an MVNO. For example, when the involved operator is an MVNO, the identifier of the involved operator may be an MVNO ID or an international mobile subscriber identity (International Mobile Subscriber Identity, IMSI for short) number segment corresponding to the MVNO.

S102. The core network device performs, according to the congestion notification message, congestion control on the involved operator corresponding to the identifier of the involved operator.

Further, the congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator. The congestion cause of the involved operator on which congestion occurs may be, for example, that a UE quantity resource, a connection quantity resource or a bandwidth resource available to the involved operator is insufficient; the resource usage, in the congested cell, of the involved operator on which congestion occurs may be, for example, type information such as a percentage or high/middle/low proportion, or a congestion degree of an access user equipment quantity resource, a bearer connection quantity resource, and/or a bandwidth resource occupied by the involved operator in the congested cell; the resource usage, in the another available cell of the RAN device or the adjacent RAN device of the RAN device, of the involved operator corresponding to the identifier of the involved operator may be, for example, a user equipment quantity resource, a connection quantity resource, or a bandwidth resource.

For different core network devices, there are four implementable manners in this aspect. In a first implementable manner, the core network device is an MME/SGSN, and in this case, S101 is specifically as follows:
S101a. The MME/SGSN receives the congestion notification message sent when the RAN device detects that congestion occurs on the one or more involved operators, where the congestion notification message includes the identifier of the involved operator on which congestion occurs.
S101b. The MME/SGSN records the congestion notification message, and sends a congestion notification response message to the RAN device.

S102 is specifically as follows:
S102a. The MME/SGSN receives an access request sent by user equipment UE by using the RAN device, where the access request includes information about a to-be-accessed involved operator.
S102b. The MME/SGSN sends an access reject message to the UE according to the information about the involved operator included in the access request and the congestion notification message.

On a 4G network, the access request is an attach request; or the access request is a service request initiated by the UE; or the access request is a tracking area update request; or the access request is a routing area update request.

On a 2G/3G network, the access request is a primary/secondary Packet Data Protocol (Packet Data Protocol, PDP for short) context setup or modify request initiated by the UE.

The access reject message may further include: an access reject cause and idle cell indication information, where the idle cell indication information is used for the UE to choose to access an idle cell indicated by the idle cell indication information.

In a second implementable manner, the core network device includes an MME/SGSN, an S-GW, a P-GW/GGSN, and a policy and charging rules function entity (Policy and Charging Rules Function, PCRF for short), and in this case, S101 is specifically as follows:
S101c. The MME/SGSN receives the congestion notification message sent when the RAN device detects that congestion occurs on the one or more involved operators.
S101d. The MME/SGSN records the congestion notification message, and sends a congestion notification response message to the RAN device.

S102 is specifically as follows:
S102c. The PCRF sends an IP-connectivity access network (IP Connectivity Access Network, IP-CAN for short) session modify request to the P-GW/GGSN.
S102d. The P-GW/GGSN initiates a bearer setup/modify request to the MME/SGSN according to the IP-CAN session modify request by using the S-GW, where the bearer setup/modify request includes IMSI information of UE/an identifier of an involved operator to which UE belongs.
S102e. The MME/SGSN rejects the bearer setup/modify request according to the IMSI information/the identifier of the involved operator and the congestion notification message.

Further, the method further includes:
initiating, by the MME/SGSN, a bearer setup/modify reject response to the P-GW/GGSN by using the S-GW, where the bearer setup/modify reject response includes a reject cause; and
sending, by the P-GW/GGSN, an IP-CAN session modify response message to the PCRF, where the IP-CAN session modify response message includes the reject cause.

In the foregoing two possible implementation manners, the method may further include:
receiving, by the MME/SGSN, a congestion relief notification message sent when the RAN device detects that a congestion situation of the involved operator on which congestion occurs in the RAN device is relieved; and
sending, by the MME/SGSN, a congestion relief response message to the RAN device.

In a third implementable manner, the core network device includes an MME/SGSN, an S-GW, a P-GW/GGSN, and a PCRF, and in this case, S101 is specifically as follows:
S101e. The MME/SGSN receives the congestion notification message sent when the RAN device detects that congestion occurs on the one or more involved operators.
S101f. The MME/SGSN sends a bearer update request message to the P-GW/GGSN by using the S-GW, where the bearer update request message includes content of the congestion notification message.
S101g. The P-GW/GGSN receives the bearer update request message.
S101h. The P-GW/GGSN records the bearer update request message, and sends a congestion notification response message to the RAN device by using the S-GW and the MME/SGSN.

S102 is specifically as follows:
S102f. The PCRF sends an IP-connectivity access network IP-CAN session modify request to the P-GW/GGSN.
S102g. The P-GW/GGSN determines, according to a type of the congestion notification message and a type of the IP-CAN session modify request, to reject the IP-CAN session modify request.

Further, the method further includes:
sending, by the P-GW/GGSN, an IP-CAN session modify response message to the PCRF, where the IP-CAN session modify response message includes a reject cause.

Further, the method further includes:
receiving, by the MME/SGSN, a congestion relief notification message sent when the RAN device detects that a congestion situation of the involved operator on which congestion occurs in the RAN device is relieved;
sending, by the MME/SGSN, the congestion relief notification message to the P-GW/GGSN by using the S-GW; and
sending, by the P-GW/GGSN, a congestion relief response message to the RAN device by using the S-GW and the MME/SGSN.

In a fourth implementable manner, the core network device includes an S-GW, a P-GW/GGSN, and a PCRF, and in this case, S101 is specifically as follows:
S101i. The P-GW/GGSN receives, by using the S-GW, the congestion notification message sent when the RAN device detects that congestion occurs on the one or more involved operators.
S101j. The P-GW/GGSN records the congestion notification message, and sends a congestion notification response message to the RAN device by using the S-GW.

S102 is specifically as follows:
S102h. The PCRF sends an IP-CAN session modify request to the P-GW/GGSN.
S102i. The P-GW/GGSN determines, according to a type of the congestion notification message and a type of the IP-CAN session modify request, to reject the IP-CAN session modify request.

Further, the method further includes:
sending, by the P-GW/GGSN, an IP-CAN session modify response message to the PCRF, where the IP-CAN session modify response message includes a reject cause.

Further, the method further includes:
receiving, by the P-GW/GGSN by using the S-GW, a congestion relief notification message sent when the RAN device detects that a congestion situation of the involved operator on which congestion occurs in the RAN device is relieved; and
sending, by the P-GW/GGSN, a congestion relief response message to the RAN device by using the S-GW.

According to the congestion control method provided in this aspect of the present disclosure, a core network device receives a congestion notification message sent when a RAN device detects that congestion occurs on one or more involved operators, where the congestion notification message includes an identifier of the involved operator on which congestion occurs; and performs, according to the congestion notification message, congestion control on the involved operator corresponding to the identifier of the involved operator. Therefore, congestion control can be performed by distinguishing different involved operators, precise and efficient congestion control is implemented on a specific congestion object for a specific congestion cause, and in addition, a connection quantity resource and a bandwidth resource of an involved operator on which no congestion occurs are protected.

FIG. 2 is a flowchart of Aspect 2 of a congestion control method according to the present disclosure. That this aspect is executed by a RAN device is used as an example for description. As shown in FIG. 2, the method in this aspect may include the following steps:
S201. The RAN device detects occurrence of congestion according to resource usage of an involved operator.

Specifically, if an operator shares its network with one or more operators or virtual operators, each virtual operator needs to negotiate with the operator for RAN resource usage. For example, a corresponding ratio of RAN resources is allocated to each virtual operator, and a congestion threshold for resource control is set. The RAN device collects statistics about resource usage of each MVNO in real time. When a quantity of used resources of a virtual operator in the RAN device continuously increases to reach or exceed a preset congestion threshold for the MVNO, it is determined that congestion occurs on the virtual operator in the RAN device. A cause for congestion may be that a user equipment quantity resource, in the RAN device, available to the MVNO is insufficient, or a connection quantity resource, in the RAN device, available to a user of the MVNO is insufficient, or a bandwidth resource, in the RAN device, available to the MVNO is insufficient. That the user equipment quantity resource is insufficient means that excessive user equipment of the virtual operator is connected to the RAN device, and a set threshold is reached or exceeded. That the available connection quantity resource is insufficient means that excessive bearers that belong to user equipment of the virtual operator are simultaneously connected to the RAN device, and a threshold set for the MVNO is reached or exceeded. That the bandwidth resource is insufficient means that occupied bandwidth (for example, a throughput) of all user equipment, of the MVNO, simultaneously connected to the RAN device reaches or exceeds a threshold set for the virtual operator.

S202. When detecting that congestion occurs on one or more involved operators, the RAN device sends a congestion notification message to a core network device related to the involved operator on which congestion occurs, where the congestion notification message includes an identifier of the involved operator on which congestion occurs and is used for the core network device to perform congestion control on the involved operator corresponding to the identifier of the involved operator.

The congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator. The congestion cause of the involved operator on which congestion occurs may be, for example, that a UE quantity resource, a connection quantity resource or a bandwidth resource available to the involved operator is insufficient; the resource usage, in the congested cell, of the involved operator on which congestion occurs may be, for example, type information such as a percentage or high/middle/low proportion, or a congestion degree of an access user equipment quantity resource, a bearer connection quantity resource, and/or a bandwidth resource occupied by the involved operator in the congested cell; the resource usage, in the another available cell of the RAN device or the adjacent RAN device of the RAN device, of the involved operator corresponding to the identifier of the involved operator may be, for example, a user equipment quantity resource, a connection quantity resource, or a bandwidth resource.

For different core network devices, there are four implementable manners in this aspect. In a first implementable manner, the core network device is an MME/SGSN, and in this case, S202 is specifically as follows:
S202a. When detecting that congestion occurs on the one or more involved operators, the RAN device sends the congestion notification message to the MME/SGSN related to the involved operator on which congestion occurs, so that the MME/SGSN records the congestion notification message, and performs, according to the congestion notification message, congestion control on the involved operator corresponding to the identifier of the involved operator.

In this case, the method further includes:
receiving, by the RAN device, a congestion notification response message sent by the MME/SGSN.

In a second implementable manner, the core network device includes an MME/SGSN, an S-GW, a P-GW/GGSN, and a PCRF, and in this case, S202 is specifically as follows:
S202b. When detecting that congestion occurs on the one or more involved operators, the RAN device sends the congestion notification message to the MME/SGSN related to the involved operator on which congestion occurs, so that the MME/SGSN records the congestion notification message.

In this case, the method further includes: receiving, by the RAN device, a congestion notification response message sent by the MME/SGSN.

In the foregoing two implementation manners, further, the method further includes:
sending, by the RAN device, a congestion relief notification message to the MME/SGSN when detecting that a congestion situation of the involved operator on which congestion occurs in the RAN device is relieved; and
receiving, by the RAN device, a congestion relief response message sent by the MME/SGSN.

In a third implementable manner, the core network device includes an MME/SGSN, an S-GW, a P-GW/GGSN, and a PCRF, and in this case, S202 is specifically as follows:
S202c. When detecting that congestion occurs on the one or more involved operators, the RAN device sends the congestion notification message to the MME/SGSN related to the involved operator on which congestion occurs, so that the MME/SGSN sends a bearer update request message to the P-GW/GGSN by using the S-GW, where the bearer update request message includes content of the congestion notification message.

In this case, the method further includes:
receiving, by the RAN device, a congestion notification response message sent by the P-GW/GGSN by using the S-GW and the MME/SGSN.

Further, the method further includes:
sending, by the RAN device, a congestion relief notification message to the MME/SGSN when detecting that a congestion situation of the involved operator on which congestion occurs in the RAN device is relieved, so that the MME/SGSN sends the congestion relief notification message to the P-GW/GGSN by using the S-GW; and
receiving, by the RAN device, a congestion relief response message sent by the P-GW/GGSN by using the S-GW and the MME/SGSN.

In a fourth implementable manner, the core network device includes an S-GW, a P-GW/GGSN, and a PCRF, and in this case, S202 is specifically as follows:
S202d. When detecting that congestion occurs on the one or more involved operators, the RAN device sends the congestion notification message to the S-GW related to the involved operator on which congestion occurs, so that the S-GW sends the congestion notification message to the P-GW/GGSN.

In this case, the method further includes:
receiving, by the RAN device, a congestion notification response message sent by the P-GW/GGSN by using the S-GW.

Further, the method further includes:
sending, by the RAN device, a congestion relief notification message to the S-GW when detecting that a congestion situation of the involved operator on which congestion occurs in the RAN device is relieved, so that the S-GW sends the congestion relief notification message to the P-GW/GGSN; and
receiving, by the RAN device, a congestion relief response message sent by the P-GW/GGSN by using the S-GW.

According to the congestion control method provided in this aspect of the present disclosure, a RAN device detects occurrence of congestion according to resource usage of an involved operator; when detecting that congestion occurs on one or more involved operators, the RAN device sends a congestion notification message to a core network device related to the involved operator on which congestion occurs, where the congestion notification message includes an identifier of the involved operator on which congestion occurs and is used for the core network device to perform congestion control on the involved operator corresponding to the identifier of the involved operator. Therefore, congestion control can be performed by distinguishing different involved operators, precise and efficient congestion control is implemented on a specific congestion object for a specific congestion cause, and in addition, a connection quantity resource and a bandwidth resource of an involved operator on which no congestion occurs are protected.

The following describes the technical solutions in the foregoing method aspect in detail by using four specific aspects.

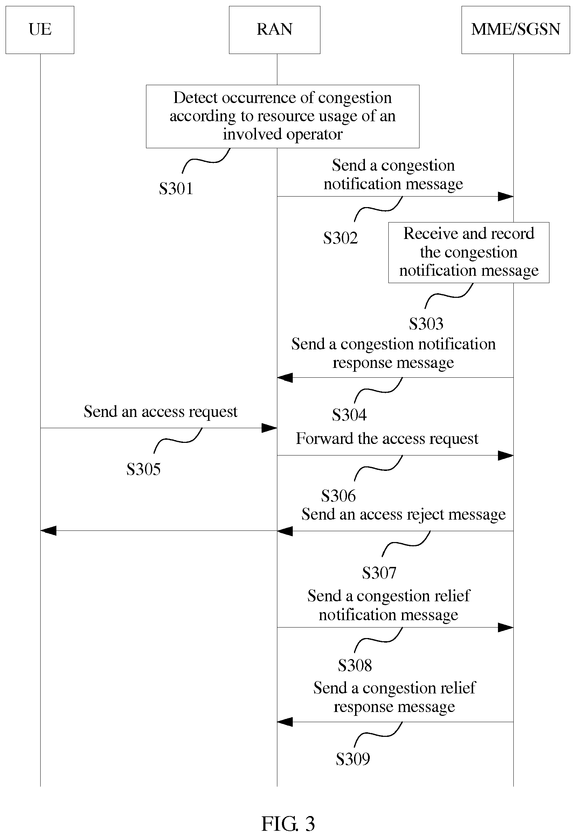

FIG. 3 is a signaling interworking diagram of Aspect 3 of a congestion control method according to the present disclosure. As shown in FIG. 3, a core network device in this aspect is an MME/SGSN, and the method in this aspect may include the following steps:
S301. A RAN device detects occurrence of congestion according to resource usage of an involved operator.

Specifically, for example, the RAN device collects statistics about resource usage of each involved operator MVNO in real time; when a quantity of used resources of a virtual operator in the RAN device continuously increases to reach or exceed a preset congestion threshold for the MVNO, it is determined that congestion occurs on the virtual operator in the RAN device.

S302. When detecting that congestion occurs on one or more involved operators, the RAN device sends a congestion notification message to the MME/SGSN related to the involved operator on which congestion occurs, where the congestion notification message includes an identifier of the involved operator on which congestion occurs.

Specifically, for example, the RAN device selects a corresponding MME/SGSN according to an identifier (such as an MVNO ID, an IMSI number segment, or a public land mobile network (Public Land Mobile Network, PLMN for short) ID) of an MVNO on which congestion occurs, and sends the congestion notification message. The RAN device may also send the congestion notification message to all MMEs/SGSNs connected to the RAN device.

The congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.
S303. The MME/SGSN receives the congestion notification message and records the congestion notification message.
S304. The MME/SGSN sends a congestion notification response message to the RAN device.
S305. UE sends an access request to the RAN device, where the access request includes information about a to-be-accessed involved operator.
S306. The RAN device forwards the received access request to the MME/SGSN.
S307. The MME/SGSN sends an access reject message to the UE according to the information about the involved operator included in the access request and the congestion notification message.

On a 4G network, the access request is an attach request; or the access request is a service request initiated by the UE; or the access request is a tracking area update request; or the access request is a routing area update request.

On a 2G/3G network, the access request is a primary/secondary Packet Data Protocol PDP context setup or modify request initiated by the UE.

For example, when a congestion cause included in the congestion notification message sent by the RAN device to the MME/SGSN is that a user equipment quantity resource exceeds a preset value, and the MME/SGSN determines, according to MVNO information included in an access request message, that the user equipment belongs to the virtual operator on which a congestion occurs, the MME/SGSN rejects the access request of the user equipment according to the foregoing information.

In a 4G network scenario, the user equipment needs to establish a default bearer in an attach process. Therefore, in the 4G scenario, when a congestion type included in the congestion notification message sent by the RAN device to the MME is congestion caused by that a connection quantity resource exceeds a preset value, and the MME determines, according to the MVNO information included in the access request message, that the user equipment belongs to the virtual operator on which a congestion occurs and that an access type of a user is attaching, the MME rejects the attach request of the user equipment.

Further, the access reject message may further include: an access reject cause and idle cell indication information, where the idle cell indication information is used for the UE to choose to access an idle cell indicated by the idle cell indication information. For example, the access reject cause is that congestion occurs on the virtual operator in the RAN device because the user equipment quantity resource or the connection quantity resource exceeds a limit, and another available cell may further be indicated to the user equipment, so as to instruct the user equipment to access the idle cell. To instruct the user equipment to access the idle cell, information about the idle cell may be sent to the user equipment by using a non-access stratum (NAS) message, and the user equipment selects an appropriate cell for access. In a 4G network scenario, the information about the idle cell may be sent to the RAN device by using a system message (S1) access point (AP) message header, and the RAN device instructs the user equipment to select an appropriate cell for access. In a 3G network scenario, the information about the idle cell may be sent to the RAN device by using a RAN AP message header, and the RAN device instructs the user equipment to select an appropriate cell for access. In a 2G network scenario, the information about the idle cell may be sent to the RAN device by using a base station subsystem (BSS) AP message header, and the RAN device instructs the user equipment to select an appropriate cell for access.

S308. When detecting that a congestion situation of the involved operator on which congestion occurs in the RAN device is relieved, the RAN device sends a congestion relief notification message to the MME/SGSN.

For example, when resources (a connection quantity resource/a bandwidth resource) occupied by the MVNO on which congestion occurs in the RAN device gradually decrease to reach or to be lower than a preset congestion relief threshold for the MVNO, the RAN device determines that a congestion situation of the MVNO is relieved. The RAN device may send the congestion relief notification message to all MMEs/SGSNs connected to the RAN device; or may send the congestion relief notification message to only an MME/SGSN related to the MVNO on which congestion occurs. For example, the RAN device selects a corresponding MME/SGSN according to an identifier (such as an MVNO ID, an IMSI number segment, or a PLMN ID) of the MVNO on which congestion occurs, and sends the congestion relief notification message.

S309. The MME/SGSN sends a congestion relief response message to the RAN device.

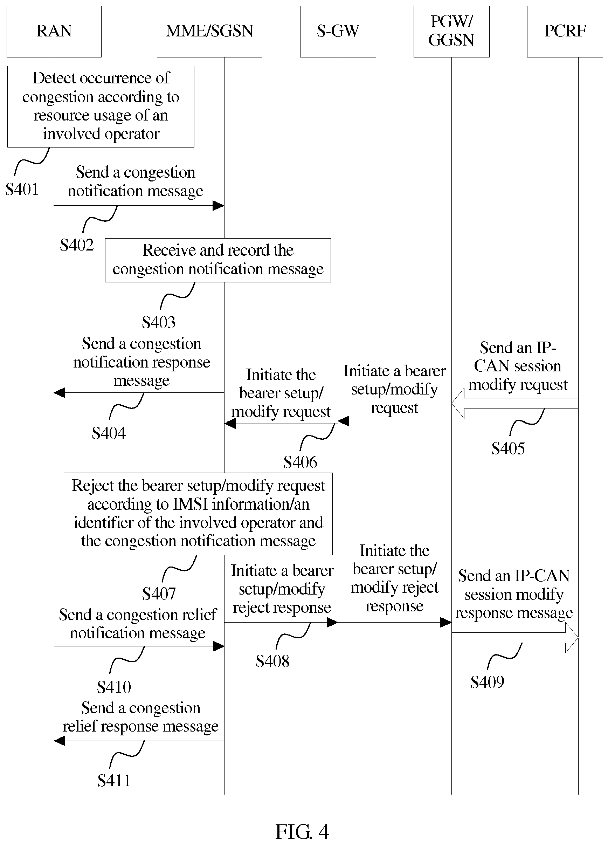

FIG. 4 is a signaling interworking diagram of Aspect 4 of a congestion control method according to the present disclosure. A core network device in this aspect includes an MME/SGSN, an S-GW, a P-GW/GGSN, and a PCRF, and as shown in FIG. 4, the method in this aspect may include the following steps:
S401 to S404 in this aspect are the same as steps S301 to S304 in Aspect 3 shown in FIG. 3, and details are not described herein again.
S405. The PCRF sends an IP-CAN session modify request to the P-GW/GGSN.
S406. The P-GW/GGSN initiates a bearer setup/modify request to the MME/SGSN according to the IP-CAN session modify request by using the S-GW, where the bearer setup/modify request includes IMSI information of UE/an identifier of an involved operator to which UE belongs.
S407. The MME/SGSN rejects the bearer setup/modify request according to the IMSI information/the identifier of the involved operator and the congestion notification message.

Specifically, for example, when a congestion cause included in the congestion notification message sent by the RAN device to the MME/SGSN is that a connection quantity resource and/or a bandwidth resource exceeds a preset value, and the MME/SGSN determines, according to the IMSI information/the identifier of the involved operator, that the UE belongs to the involved operator on which congestion occurs, the following actions are executed according to different situations:
when the congestion cause is that the connection quantity resource is insufficient, and a type of a request message received by the MME/SGSN is a bearer setup request, the MME/SGSN rejects the bearer setup request; or
when the congestion cause is that the bandwidth resource is insufficient, a type of a request message received by the MME/SGSN is a bearer update request, and updating a bearer needs to increase bearer bandwidth, or a type of a request message received by the MME/SGSN is a new-bearer setup request, the MME/SGSN rejects the bearer update request.

S408. The MME/SGSN initiates a bearer setup/modify reject response to the P-GW/GGSN by using the S-GW, where the bearer setup/modify reject response includes a reject cause.
S409. The P-GW/GGSN sends an IP-CAN session modify response message to the PCRF, where the IP-CAN session modify response message includes the reject cause.

Specifically, the MME/SGSN initiates, by using the S-GW, the bearer setup/modify reject response to the P-GW/GGSN according to a policy made in the foregoing procedure. For example, the response may include a reject cause that congestion occurs on an MVNO, where a congestion type is that a connection quantity resource and/or a bandwidth resource exceeds a preset value. The P-GW/GGSN sends the IP-CAN session modify response message to the PCRF, where the message may include the reject cause that the congestion occurs on the MVNO, where the congestion type is that the connection quantity resource and/or the bandwidth resource exceeds a preset value.

S410. When detecting that a congestion situation of the involved operator on which congestion occurs in the RAN device is relieved, the RAN device sends a congestion relief notification message to the MME/SGSN.

For example, when resources (a connection quantity resource/a bandwidth resource) occupied by the MVNO on which congestion occurs in the RAN device gradually decrease to reach or to be lower than a preset congestion relief threshold for the MVNO, the RAN device determines that a congestion situation of the MVNO is relieved. The RAN device may send the congestion relief notification message to all MMEs/SGSNs connected to the RAN device; or may send the congestion relief notification message to only an MME/SGSN related to the MVNO on which congestion occurs. For example, the RAN device selects a corresponding MME/SGSN according to an identifier (such as an MVNO ID, an IMSI number segment, or a PLMN ID) of the MVNO on which congestion occurs, and sends the congestion relief notification message.

S411. The MME/SGSN sends a congestion relief response message to the RAN device.

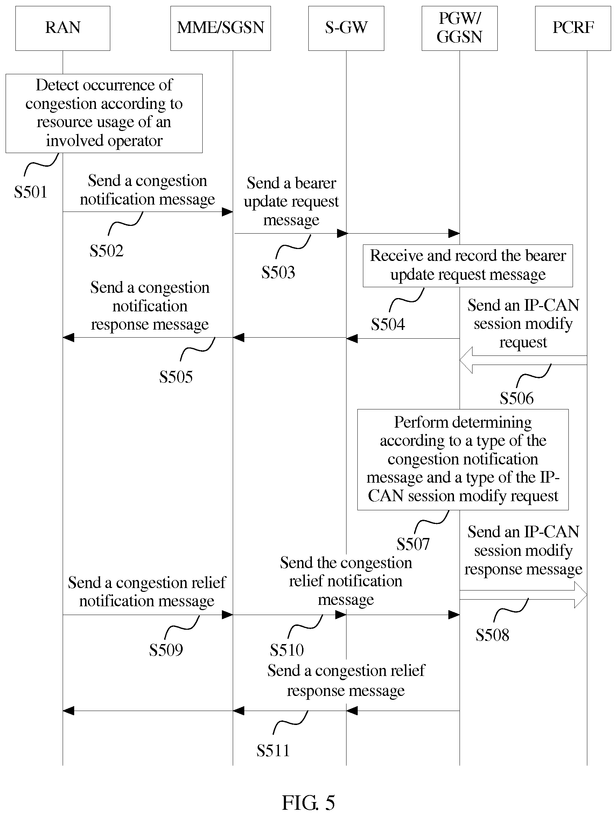

FIG. 5 is a signaling interworking diagram of Aspect 5 of a congestion control method according to the present disclosure. A core network device in this aspect includes an MME/SGSN, an S-GW, a P-GW/GGSN, and a PCRF, and as shown in FIG. 5, the method in this aspect may include the following steps:
S501. A RAN device detects occurrence of congestion according to resource usage of an involved operator.

Specifically, for example, the RAN device collects statistics about resource usage of each involved operator MVNO in real time; when a quantity of used resources of a virtual operator in the RAN device continuously increases to reach or exceed a preset congestion threshold for the MVNO, it is determined that congestion occurs on the virtual operator in the RAN device.

S502. When detecting that congestion occurs on one or more involved operators, the RAN device sends a congestion notification message to the MME/SGSN related to the involved operator on which congestion occurs, where the congestion notification message includes an identifier of the involved operator on which congestion occurs.

Specifically, for example, the RAN device selects a corresponding MME/SGSN according to an identifier (such as an MVNO ID, an IMSI number segment, or a PLMN ID) of an MVNO on which congestion occurs, and sends the congestion notification message. The RAN device may also send the congestion notification message to all MMEs/SGSNs connected to the RAN device.

The congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.
S503. The MME/SGSN sends a bearer update request message to the P-GW/GGSN by using the S-GW, where the bearer update request message includes content of the congestion notification message.
S504. The P-GW/GGSN receives and records the bearer update request message.
S505. The P-GW/GGSN sends a congestion notification response message to the RAN device by using the S-GW and the MME/SGSN.
S506. The PCRF sends an IP-CAN session modify request to the P-GW/GGSN.
S507. The P-GW/GGSN determines, according to a type of the congestion notification message and a type of the IP-CAN session modify request, to reject the IP-CAN session modify request.
S508. The P-GW/GGSN sends an IP-CAN session modify response message to the PCRF, where the IP-CAN session modify response message includes a reject cause.
S509. When detecting that a congestion situation of the involved operator on which congestion occurs in the RAN device is relieved, the RAN device sends a congestion relief notification message to the MME/SGSN.

For example, when resources (a connection quantity resource/a bandwidth resource) occupied by the MVNO on which congestion occurs in the RAN device gradually decrease to reach or to be lower than a preset congestion relief threshold for the MVNO, the RAN device determines that a congestion situation of the MVNO is relieved. The RAN device may send the congestion relief notification message to all MMEs/SGSNs connected to the RAN device; or may send the congestion relief notification message to only an MME/SGSN related to the MVNO on which congestion occurs. For example, the RAN device selects a corresponding MME/SGSN according to an identifier (such as an MVNO ID, an IMSI number segment, or a PLMN ID) of the MVNO on which congestion occurs, and sends the congestion relief notification message.
5510. The MME/SGSN sends the congestion relief notification message to the P-GW/GGSN by using the S-GW.
S511. The P-GW/GGSN sends a congestion relief response message to the RAN device by using the S-GW and the MME/SGSN.

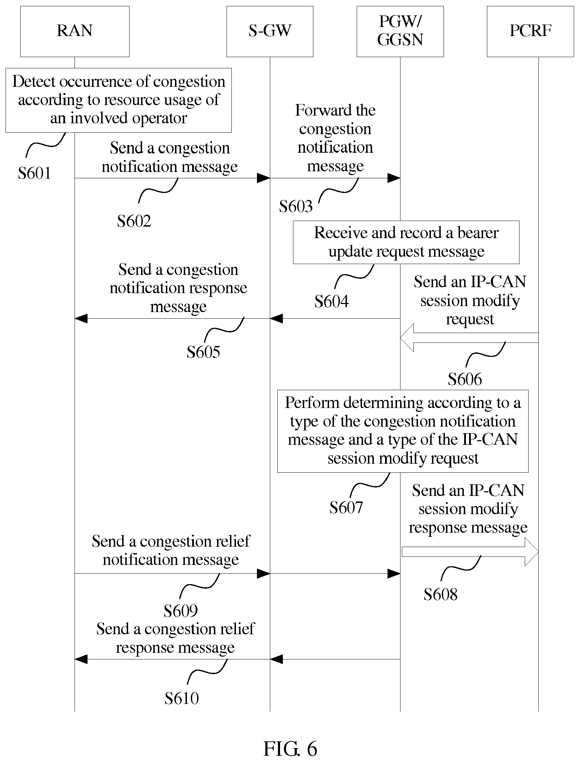

FIG. 6 is a signaling interworking diagram of Aspect 6 of a congestion control method according to the present disclosure. A core network device in this aspect includes an S-GW, a P-GW/GGSN, and a PCRF, and as shown in FIG. 6, the method in this aspect may include the following steps:
S601. A RAN device detects occurrence of congestion according to resource usage of an involved operator.

Specifically, for example, the RAN device collects statistics about resource usage of each involved operator MVNO in real time; when a quantity of used resources of a virtual operator in the RAN device continuously increases to reach or exceed a preset congestion threshold for the MVNO, it is determined that congestion occurs on the virtual operator in the RAN device.

S602. When detecting that congestion occurs on one or more involved operators, the RAN device sends a congestion notification message to the S-GW related to the involved operator on which congestion occurs, where the congestion notification message includes an identifier of the involved operator on which congestion occurs.

Specifically, for example, the RAN device selects a corresponding MME/SGSN according to an identifier (such as an MVNO ID, an IMSI number segment, or a PLMN ID) of an MVNO on which congestion occurs, and sends the congestion notification message. The RAN device may also send the congestion notification message to all MMEs/SGSNs connected to the RAN device.

The congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.
S603. The S-GW forwards the congestion notification message to the P-GW/GGSN.
S604. The P-GW/GGSN receives and records the congestion notification message.
S605. The P-GW/GGSN sends a congestion notification response message to the RAN device by using the S-GW.
S606. The PCRF sends an IP-CAN session modify request to the P-GW/GGSN.
S607. The P-GW/GGSN determines, according to a type of the congestion notification message and a type of the IP-CAN session modify request, to reject the IP-CAN session modify request.
S608. The P-GW/GGSN sends an IP-CAN session modify response message to the PCRF, where the IP-CAN session modify response message includes a reject cause.
S609. When detecting that a congestion situation of the involved operator on which congestion occurs in the RAN device is relieved, the RAN device sends a congestion relief notification message to the P-GW/GGSN by using the S-GW.
S610. The P-GW/GGSN sends a congestion relief response message to the RAN device by using the S-GW.

The congestion relief notification message includes at least one of the following information: (1) an identifier of an MVNO whose congestion situation is relieved (for example, the identifier may be a parameter used to identify one or more MVNOs on which congestion occurs, or may be an MVNO ID (MVNO ID) or an IMSI number segment corresponding to the MVNO); (2) a congestion cause of an MVNO whose congestion situation is relieved.

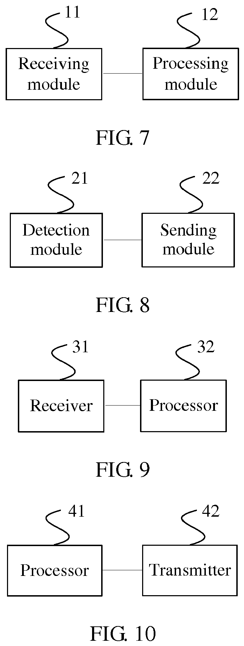

FIG. 7 is a schematic structural diagram of Aspect 1 of a core network device according to the present disclosure. As shown in FIG. 7, the apparatus in this aspect may include: a receiving module 11 and a processing module 12. The receiving module 11 is configured to receive a congestion notification message sent when a RAN device detects that congestion occurs on one or more involved operators, where the congestion notification message includes an identifier of the involved operator on which congestion occurs. The processing module 12 is configured to perform, according to the congestion notification message, congestion control on the involved operator corresponding to the identifier of the involved operator.

Further, the congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.

For different core network devices, there are four implementable manners in this aspect. In a first implementable manner, when the core network device is an MME/SGSN, the MME/SGSN includes: a first receiving module, a first sending module, and a first processing module. The first receiving module is configured to receive the congestion notification message sent when the RAN device detects that congestion occurs on the one or more involved operators. The first sending module is configured to: record the congestion notification message, and send a congestion notification response message to the RAN device. The first receiving module is further configured to receive an access request sent by user equipment UE by using the RAN device, where the access request includes information about a to-be-accessed involved operator. The first processing module is configured to send an access reject message to the UE according to the information about the involved operator included in the access request and the congestion notification message.

On a 4G network, the access request is an attach request; or the access request is a service request initiated by the UE; or the access request is a tracking area update request; or the access request is a routing area update request.

On a 2G/3G network, the access request is a primary/secondary PDP context setup or modify request initiated by the UE.

The access reject message further includes: an access reject cause and idle cell indication information, where the idle cell indication information is used for the UE to choose to access an idle cell indicated by the idle cell indication information.

In a second possible implementation manner, when the core network device includes an MME/SGSN, an S-GW, a P-GW/GGSN, and a PCRF, the MME/SGSN includes: a second receiving module and a second sending module. The second receiving module is configured to receive the congestion notification message sent when the RAN device detects that congestion occurs on the one or more involved operators. The second sending module is configured to: record the congestion notification message, and send a congestion notification response message to the RAN device.

The PCRF includes a third sending module, where the third sending module is configured to send an IP-connectivity access network IP-CAN session modify request to the P-GW/GGSN.

The P-GW/GGSN includes a fourth sending module, where the fourth sending module is configured to initiate a bearer setup/modify request to the MME/SGSN according to the IP-CAN session modify request by using the S-GW, where the bearer setup/modify request includes international mobile subscriber identity IMSI information of UE/an identifier of an involved operator to which UE belongs.

The MME/SGSN further includes a second processing module, where the second processing module is configured to reject the bearer setup/modify request according to the IMSI information/the identifier of the involved operator and the congestion notification message.

Further, the second sending module is further configured to initiate a bearer setup/modify reject response to the P-GW/GGSN by using the S-GW, where the bearer setup/modify reject response includes a reject cause.

The fourth sending module is further configured to send an IP-CAN session modify response message to the PCRF, where the IP-CAN session modify response message includes the reject cause.

In the foregoing two implementation manners, further, the second receiving module is further configured to receive a congestion relief notification message sent when the RAN device detects that a congestion situation of the involved operator on which congestion occurs in the RAN device is relieved, and the second sending module is further configured to send a congestion relief response message to the RAN device.

In a third possible implementation manner, when the core network device includes an MME/SGSN, an S-GW, a P-GW/GGSN, and a PCRF, the MME/SGSN includes: a third receiving module and a fifth sending module. The third receiving module is configured to receive the congestion notification message sent when the RAN device detects that congestion occurs on the one or more involved operators. The fifth sending module is configured to send a bearer update request message to the P-GW/GGSN by using the S-GW, where the bearer update request message includes content of the congestion notification message.

The P-GW/GGSN includes: a fourth receiving module and a sixth sending module, where the fourth receiving module is configured to receive the bearer update request message; and the sixth sending module is configured to: record the bearer update request message, and send a congestion notification response message to the RAN device by using the S-GW and the MME/SGSN.

The PCRF includes a seventh sending module, where the seventh sending module is configured to send an IP-connectivity access network IP-CAN session modify request to the P-GW/GGSN.

The P-GW/GGSN further includes a third processing module, where the third processing module is configured to determine, according to a type of the congestion notification message and a type of the IP-CAN session modify request, to reject the IP-CAN session modify request.

Further, the sixth sending module is further configured to send an IP-CAN session modify response message to the PCRF, where the IP-CAN session modify response message includes a reject cause.

Further, the third receiving module is further configured to receive a congestion relief notification message sent when the RAN device detects that a congestion situation of the involved operator on which congestion occurs in the RAN device is relieved.

The fifth sending module is further configured to send the congestion relief notification message to the P-GW/GGSN by using the S-GW.

The sixth sending module is further configured to send a congestion relief response message to the RAN device by using the S-GW and the MME/SGSN.

In a fourth possible implementation manner, when the core network device includes an S-GW, a P-GW/GGSN, and a PCRF, the P-GW/GGSN includes: a fifth receiving module and a seventh sending module. The fifth receiving module is configured to receive, by using the S-GW, the congestion notification message sent when the RAN device detects that congestion occurs on the one or more involved operators. The seventh sending module is configured to: record the congestion notification message, and send a congestion notification response message to the RAN device by using the S-GW.

The PCRF includes an eighth sending module, where the eighth sending module is configured to send an IP-CAN session modify request to the P-GW/GGSN.

The P-GW/GGSN includes a fourth processing module, where the fourth processing module is configured to determine, according to a type of the congestion notification message and a type of the IP-CAN session modify request, to reject the IP-CAN session modify request.

Further, the seventh sending module is further configured to send an IP-CAN session modify response message to the PCRF, where the IP-CAN session modify response message includes a reject cause.

Further, the fifth receiving module is further configured to receive, by using the S-GW, a congestion relief notification message sent when the RAN device detects that a congestion situation of the involved operator on which congestion occurs in the RAN device is relieved, and the seventh sending module is further configured to send a congestion relief response message to the RAN device by using the S-GW.

The apparatus in this aspect may be configured to execute the technical solution in the method aspect shown in FIG. 1. Implementation principles thereof are similar, and details are not described herein again.

According to the core network device provided in this aspect of the present disclosure, a receiving module receives a congestion notification message sent when a RAN device detects that congestion occurs on one or more involved operators, where the congestion notification message includes an identifier of the involved operator on which congestion occurs; then a processing module performs, according to the congestion notification message, congestion control on the involved operator corresponding to the identifier of the involved operator. Therefore, congestion control can be performed by distinguishing different involved operators, precise and efficient congestion control is implemented on a specific congestion object for a specific congestion cause, and in addition, a connection quantity resource and a bandwidth resource of an involved operator on which no congestion occurs are protected.

FIG. 8 is a schematic structural diagram of Aspect 1 of a RAN device according to the present disclosure. As shown in FIG. 8, the apparatus in this aspect may include: a detection module 21 and a sending module 22. The detection module 21 is configured to detect occurrence of congestion according to resource usage of an involved operator. The sending module 22 is configured to: when the detection module 21 detects that congestion occurs on one or more involved operators, send a congestion notification message to a core network device related to the involved operator on which congestion occurs, where the congestion notification message includes an identifier of the involved operator on which congestion occurs and is used for the core network device to perform congestion control on the involved operator corresponding to the identifier of the involved operator.

Further, the congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.

For different core network devices, there are four implementable manners in this aspect. In a first implementable manner, when the core network device is an MME/SGSN, the sending module 22 is configured to:
when the detection module 21 detects that congestion occurs on the one or more involved operators, send the congestion notification message to the MME/SGSN related to the involved operator on which congestion occurs, so that the MME/SGSN records the congestion notification message, and performs, according to the congestion notification message, congestion control on the involved operator corresponding to the identifier of the involved operator.

The RAN device further includes a first receiving module, where the first receiving module is configured to receive a congestion notification response message sent by the MME/SGSN.

In a second implementable manner, when the core network device includes an MME/SGSN, an S-GW, a P-GW/GGSN, and a PCRF, the sending module 22 is configured to:
when the detection module 21 detects that congestion occurs on the one or more involved operators, send the congestion notification message to the MME/SGSN related to the involved operator on which congestion occurs, so that the MME/SGSN records the congestion notification message.

The RAN device further includes a second receiving module, where the second receiving module is configured to receive a congestion notification response message sent by the MME/SGSN.

In the foregoing two implementation manners, the sending module 22 is further configured to:
send a congestion relief notification message to the MME/SGSN when the detection module 21 detects that a congestion situation of the involved operator on which congestion occurs in the RAN device is relieved; and
the first receiving module or the second receiving module is further configured to receive a congestion relief response message sent by the MME/SGSN.

In a third implementable manner, when the core network device includes an MME/SGSN, an S-GW, a P-GW/GGSN, and a PCRF, the sending module 22 is configured to:
when the detection module 21 detects that congestion occurs on the one or more involved operators, send the congestion notification message to the MME/SGSN related to the involved operator on which congestion occurs, so that the MME/SGSN sends a bearer update request message to the P-GW/GGSN by using the S-GW, where the bearer update request message includes content of the congestion notification message.

The RAN device further includes a third receiving module, where the third receiving module is configured to receive a congestion notification response message sent by the P-GW/GGSN by using the S-GW and the MME/SGSN.

Further, the sending module 22 is further configured to:
send a congestion relief notification message to the MME/SGSN when the detection module 21 detects that a congestion situation of the involved operator on which congestion occurs in the RAN device is relieved, so that the MME/SGSN sends the congestion relief notification message to the P-GW/GGSN by using the S-GW; and
the third receiving module is further configured to receive a congestion relief response message sent by the P-GW/GGSN by using the S-GW and the MME/SGSN.

In a fourth implementable manner, when the core network device includes an S-GW, a P-GW/GGSN, and a PCRF, the sending module 22 is configured to:
when the detection module 21 detects that congestion occurs on the one or more involved operators, send the congestion notification message to the S-GW related to the involved operator on which congestion occurs, so that the S-GW sends the congestion notification message to the P-GW/GGSN.

The RAN device further includes:
a fourth receiving module, configured to receive a congestion notification response message sent by the P-GW/GGSN by using the S-GW.

Further, the sending module 22 is further configured to:
send a congestion relief notification message to the S-GW when the detection module 21 detects that a congestion situation of the involved operator on which congestion occurs in the RAN device is relieved, so that the S-GW sends the congestion relief notification message to the P-GW/GGSN; and
the fourth receiving module is further configured to receive a congestion relief response message sent by the P-GW/GGSN by using the S-GW.

The apparatus in this aspect may be configured to execute the technical solution in the method aspect shown in FIG. 2. Implementation principles and technical effects thereof are similar, and details are not described herein again.

According to the RAN device provided in this aspect of the present disclosure, a detection module detects occurrence of congestion according to resource usage of an involved operator; when the RAN device detects that congestion occurs on one or more involved operators, a sending module sends a congestion notification message to a core network device related to the involved operator on which congestion occurs, where the congestion notification message includes an identifier of the involved operator on which congestion occurs and is used for the core network device to perform congestion control on the involved operator corresponding to the identifier of the involved operator. Therefore, congestion control can be performed by distinguishing different involved operators, precise and efficient congestion control is implemented on a specific congestion object for a specific congestion cause, and in addition, a connection quantity resource and a bandwidth resource of an involved operator on which no congestion occurs are protected.

A communications system provided in an aspect of the present disclosure includes the core network device shown in FIG. 7 and the RAN device shown in FIG. 8.

FIG. 9 is a schematic structural diagram of Aspect 2 of a core network device according to the present disclosure. As shown in FIG. 9, the apparatus in this aspect may include: a receiver 31 and a processor 32. The receiver 31 is configured to receive a congestion notification message sent when a RAN device detects that congestion occurs on one or more involved operators, where the congestion notification message includes an identifier of the involved operator on which congestion occurs. The processor 32 is configured to perform, according to the congestion notification message, congestion control on the involved operator corresponding to the identifier of the involved operator.

Further, the congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.

For different core network devices, there are four implementable manners in this aspect. In a first implementable manner, when the core network device is an MME/SGSN, the MME/SGSN includes: a first receiver, a first transmitter, and a first processor. The first receiver is configured to receive the congestion notification message sent when the RAN device detects that congestion occurs on the one or more involved operators. The first transmitter is configured to: record the congestion notification message, and send a congestion notification response message to the RAN device. The first receiver is further configured to receive an access request sent by user equipment UE by using the RAN device, where the access request includes information about a to-be-accessed involved operator. The first processor is configured to send an access reject message to the UE according to the information about the involved operator included in the access request and the congestion notification message.

On a 4G network, the access request is an attach request; or the access request is a service request initiated by the UE; or the access request is a tracking area update request; or the access request is a routing area update request.

On a 2G/3G network, the access request is a primary/secondary PDP context setup or modify request initiated by the UE.

The access reject message further includes: an access reject cause and idle cell indication information, where the idle cell indication information is used for the UE to choose to access an idle cell indicated by the idle cell indication information.

In a second possible implementation manner, when the core network device includes an MME/SGSN, an S-GW, a P-GW/GGSN, and a PCRF, the MME/SGSN includes: a second receiver and a second transmitter. The second receiver is configured to receive the congestion notification message sent when the RAN device detects that congestion occurs on the one or more involved operators. The second transmitter is configured to: record the congestion notification message, and send a congestion notification response message to the RAN device.

The PCRF includes a third transmitter, where the third transmitter is configured to send an IP-connectivity access network IP-CAN session modify request to the P-GW/GGSN.

The P-GW/GGSN includes a fourth transmitter, where the fourth transmitter is configured to initiate a bearer setup/modify request to the MME/SGSN according to the IP-CAN session modify request by using the S-GW, where the bearer setup/modify request includes international mobile subscriber identity IMSI information of UE/an identifier of an involved operator to which UE belongs.

The MME/SGSN further includes a second processor, where the second processor is configured to reject the bearer setup/modify request according to the IMSI information/the identifier of the involved operator and the congestion notification message.

Further, the second transmitter is further configured to initiate a bearer setup/modify reject response to the P-GW/GGSN by using the S-GW, where the bearer setup/modify reject response includes a reject cause.

The fourth transmitter is further configured to send an IP-CAN session modify response message to the PCRF, where the IP-CAN session modify response message includes the reject cause.

In the foregoing two implementation manners, further, the second receiver is further configured to receive a congestion relief notification message sent when the RAN device detects that a congestion situation of the involved operator on which congestion occurs in the RAN device is relieved, and the second transmitter is further configured to send a congestion relief response message to the RAN device.

In a third possible implementation manner, when the core network device includes an MME/SGSN, an S-GW, a P-GW/GGSN, and a PCRF, the MME/SGSN includes: a third receiver and a fifth transmitter, the third receiver is configured to receive the congestion notification message sent when the RAN device detects that congestion occurs on the one or more involved operators. The fifth transmitter is configured to send a bearer update request message to the P-GW/GGSN by using the S-GW, where the bearer update request message includes content of the congestion notification message.

The P-GW/GGSN includes: a fourth receiver and a sixth transmitter, where the fourth receiver is configured to receive the bearer update request message; and the sixth transmitter is configured to: record the bearer update request message, and send a congestion notification response message to the RAN device by using the S-GW and the MME/SGSN.

The PCRF includes a seventh transmitter, where the seventh transmitter is configured to send an IP-connectivity access network IP-CAN session modify request to the P-GW/GGSN.

The P-GW/GGSN further includes a third processor, where the third processor is configured to determine, according to a type of the congestion notification message and a type of the IP-CAN session modify request, to reject the IP-CAN session modify request.

Further, the sixth transmitter is further configured to send an IP-CAN session modify response message to the PCRF, where the IP-CAN session modify response message includes a reject cause.

Further, the third receiver is further configured to receive a congestion relief notification message sent when the RAN device detects that a congestion situation of the involved operator on which congestion occurs in the RAN device is relieved.

The fifth transmitter is further configured to send the congestion relief notification message to the P-GW/GGSN by using the S-GW.

The sixth transmitter is further configured to send a congestion relief response message to the RAN device by using the S-GW and the MME/SGSN.

In a fourth possible implementation manner, when the core network device includes an S-GW, a P-GW/GGSN, and a PCRF, the P-GW/GGSN includes: a fifth receiver and a seventh transmitter. The fifth receiver is configured to receive, by using the S-GW, the congestion notification message sent when the RAN device detects that congestion occurs on the one or more involved operators. The seventh transmitter is configured to: record the congestion notification message, and send a congestion notification response message to the RAN device by using the S-GW.

The PCRF includes an eighth transmitter, where the eighth transmitter is configured to send an IP-CAN session modify request to the P-GW/GGSN.

The P-GW/GGSN includes a fourth processor, where the fourth processor is configured to determine, according to a type of the congestion notification message and a type of the IP-CAN session modify request, to reject the IP-CAN session modify request.

Further, the seventh transmitter is further configured to send an IP-CAN session modify response message to the PCRF, where the IP-CAN session modify response message includes a reject cause.

Further, the fifth receiver is further configured to receive, by using the S-GW, a congestion relief notification message sent when the RAN device detects that a congestion situation of the involved operator on which congestion occurs in the RAN device is relieved; and the seventh transmitter is further configured to send a congestion relief response message to the RAN device by using the S-GW.

The apparatus in this aspect may be configured to execute the technical solution in the method aspect shown in FIG. 1. Implementation principles thereof are similar, and details are not described herein again.

According to the core network device provided in this aspect of the present disclosure, a receiver receives a congestion notification message sent when a RAN device detects that congestion occurs on one or more involved operators, where the congestion notification message includes an identifier of the involved operator on which congestion occurs; then a processor performs, according to the congestion notification message, congestion control on the involved operator corresponding to the identifier of the involved operator. Therefore, congestion control can be performed by distinguishing different involved operators, precise and efficient congestion control is implemented on a specific congestion object for a specific congestion cause, and in addition, a connection quantity resource and a bandwidth resource of an involved operator on which no congestion occurs are protected.

FIG. 10 is a schematic structural diagram of Aspect 2 of a RAN device according to the present disclosure. As shown in FIG. 10, the apparatus in this aspect may include: a processor 41 and a transmitter 42. The processor 41 is configured to detect occurrence of congestion according to resource usage of an involved operator. The transmitter 42 is configured to: when the processor 41 detects that congestion occurs on one or more involved operators, send a congestion notification message to a core network device related to the involved operator on which congestion occurs, where the congestion notification message includes an identifier of the involved operator on which congestion occurs and is used for the core network device to perform congestion control on the involved operator corresponding to the identifier of the involved operator.

Further, the congestion notification message further includes any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.

For different core network devices, there are four implementable manners in this aspect. In a first implementable manner, when the core network device is an MME/SGSN, the transmitter 42 is configured to:
when the processor 41 detects that congestion occurs on the one or more involved operators, send the congestion notification message to the MME/SGSN related to the involved operator on which congestion occurs, so that the MME/SGSN records the congestion notification message, and performs, according to the congestion notification message, congestion control on the involved operator corresponding to the identifier of the involved operator.

The RAN device further includes a first receiver, where the first receiver is configured to receive a congestion notification response message sent by the MME/SGSN.

In a second implementable manner, when the core network device includes an MME/SGSN, an S-GW, a P-GW/GGSN, and a PCRF, the transmitter 42 is configured to:
when the processor 41 detects that congestion occurs on the one or more involved operators, send the congestion notification message to the MME/SGSN related to the involved operator on which congestion occurs, so that the MME/SGSN records the congestion notification message.

The RAN device further includes a second receiver, where the second receiver is configured to receive a congestion notification response message sent by the MME/SGSN.

In the foregoing two implementation manners, the transmitter 42 is further configured to:
send a congestion relief notification message to the MME/SGSN when the processor 41 detects that a congestion situation of the involved operator on which congestion occurs in the RAN device is relieved; and
the first receiver or the second receiver is further configured to receive a congestion relief response message sent by the MME/SGSN.

In a third implementable manner, when the core network device includes an MME/SGSN, an S-GW, a P-GW/GGSN, and a PCRF, the transmitter 42 is configured to:
when the processor 41 detects that congestion occurs on the one or more involved operators, send the congestion notification message to the MME/SGSN related to the involved operator on which congestion occurs, so that the MME/SGSN sends a bearer update request message to the P-GW/GGSN by using the S-GW, where the bearer update request message includes content of the congestion notification message.

The RAN device further includes a third receiver, where the third receiver is configured to receive a congestion notification response message sent by the P-GW/GGSN by using the S-GW and the MME/SGSN.

Further, the transmitter 42 is further configured to:
send a congestion relief notification message to the MME/SGSN when the processor 41 detects that a congestion situation of the involved operator on which congestion occurs in the RAN device is relieved, so that the MME/SGSN sends the congestion relief notification message to the P-GW/GGSN by using the S-GW; and
the third receiver is further configured to receive a congestion relief response message sent by the P-GW/GGSN by using the S-GW and the MME/SGSN.

In a fourth implementable manner, when the core network device includes an S-GW, a P-GW/GGSN, and a PCRF, the transmitter 42 is configured to:
when the processor 41 detects that congestion occurs on the one or more involved operators, send the congestion notification message to the S-GW related to the involved operator on which congestion occurs, so that the S-GW sends the congestion notification message to the P-GW/GGSN.

The RAN device further includes:
a fourth receiver, configured to receive a congestion notification response message sent by the P-GW/GGSN by using the S-GW.

Further, the transmitter 42 is further configured to:
send a congestion relief notification message to the S-GW when the processor 41 detects that a congestion situation of the involved operator on which congestion occurs in the RAN device is relieved, so that the S-GW sends the congestion relief notification message to the P-GW/GGSN; and
the fourth receiver is further configured to receive a congestion relief response message sent by the P-GW/GGSN by using the S-GW.

The apparatus in this aspect may be configured to execute the technical solution in the method aspect shown in FIG. 2. Implementation principles and technical effects thereof are similar, and details are not described herein again.

According to the RAN device provided in this aspect of the present disclosure, a processor detects occurrence of congestion according to resource usage of an involved operator; when the RAN device detects that congestion occurs on one or more involved operators, a transmitter sends a congestion notification message to a core network device related to the involved operator on which congestion occurs, where the congestion notification message includes an identifier of the involved operator on which congestion occurs and is used for the core network device to perform congestion control on the involved operator corresponding to the identifier of the involved operator. Therefore, congestion control can be performed by distinguishing different involved operators, precise and efficient congestion control is implemented on a specific congestion object for a specific congestion cause, and in addition, a connection quantity resource and a bandwidth resource of an involved operator on which no congestion occurs are protected.

A communications system provided in an aspect of the present disclosure includes the core network device shown in FIG. 9 and the RAN device shown in FIG. 10.

In the several aspects provided in the present disclosure, it should be understood that the disclosed apparatus and method may be implemented in other manners. For example, the described apparatus aspect is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the aspects.

In addition, functional units in the aspects of the present disclosure may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor (processor) to perform some of the steps of the methods described in the aspects of the present disclosure. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by persons skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing apparatus, reference may be made to a corresponding process in the foregoing method aspects, and details are not described herein again.

Finally, it should be noted that the foregoing aspects are merely intended for describing the technical solutions of the present disclosure, but not for limiting the present disclosure. Although the present disclosure is described in detail with reference to the foregoing aspects, persons of ordinary skill in the art should understand that they may still make modifications to the technical solutions described in the foregoing aspects, without departing from the scope of the appended claims.

## Claims

1. A congestion control method, **characterised in that** the method comprises:
detecting (S201), by a radio access network, RAN, device, occurrence of congestion according to resource usage of an involved operator, wherein the involved operator is a mobile virtual network operator, MVNO, or an operator that shares an operator network; and
sending (S202), by the RAN device when detecting that congestion occurs on one or more involved operators, a congestion notification message to a core network device related to the involved operator on which congestion occurs, wherein the congestion notification message comprises an identifier of the involved operator on which congestion occurs and is used for the core network device to perform congestion control on the involved operator corresponding to the identifier of the involved operator.

2. The method according to claim 1, wherein the congestion notification message further comprises any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.

3. The method according to claim 2, wherein the core network device is a mobility management entity, MME/ serving GPRS support node, SGSN, and the sending (S202), by the RAN device when detecting that congestion occurs on one or more involved operators, a congestion notification message to a core network device related to the involved operator on which congestion occurs comprises:
sending, by the RAN device when detecting that congestion occurs on the one or more involved operators, the congestion notification message to the MME/SGSN related to the involved operator on which congestion occurs, for the MME/SGSN recording the congestion notification message, and performing, according to the congestion notification message, congestion control on the involved operator corresponding to the identifier of the involved operator; and
the method further comprises: receiving, by the RAN device, a congestion notification response message sent by the MME/SGSN.

4. The method according to claim 2, wherein the core network device comprises an MME/SGSN, a serving gateway, S-GW, a packet data network gateway, P-GW/ gateway GPRS support node, GGSN, and a policy and charging rules function PCRF, entity, and the sending (S202), by the RAN device when detecting that congestion occurs on one or more involved operators, a congestion notification message to a core network device related to the involved operator on which congestion occurs comprises:
sending, by the RAN device when detecting that congestion occurs on the one or more involved operators, the congestion notification message to the MME/SGSN related to the involved operator on which congestion occurs, for the MME/SGSN recording the congestion notification message; and
the method further comprises: receiving, by the RAN device, a congestion notification response message sent by the MME/SGSN.

5. The method according to claim 2, wherein the core network device comprises an MME/SGSN, an S-GW, a P-GW/GGSN, and a PCRF, and the sending (S202), by the RAN device when detecting that congestion occurs on one or more involved operators, a congestion notification message to a core network device related to the involved operator on which congestion occurs comprises:
sending, by the RAN device when detecting that congestion occurs on the one or more involved operators, the congestion notification message to the MME/SGSN related to the involved operator on which congestion occurs, for the MME/SGSN sending a bearer update request message to the P-GW/GGSN by using the S-GW, wherein the bearer update request message comprises content of the congestion notification message; and
the method further comprises:
receiving, by the RAN device, a congestion notification response message sent by the P-GW/GGSN by using the S-GW and the MME/SGSN.

6. The method according to claim 2, wherein the core network device comprises an S-GW, a P-GW/GGSN, and a PCRF, and the sending (S202), by the RAN device when detecting that congestion occurs on one or more involved operators, a congestion notification message to a core network device related to the involved operator on which congestion occurs comprises:
sending, by the RAN device when detecting that congestion occurs on the one or more involved operators, the congestion notification message to the S-GW related to the involved operator on which congestion occurs, for the S-GW sending the congestion notification message to the P-GW/GGSN; and
the method further comprises:
receiving, by the RAN device, a congestion notification response message sent by the P-GW/GGSN by using the S-GW.

7. A radio access network device, **characterised in that** the device comprises:
a detection module (21), configured to detect occurrence of congestion according to resource usage of an involved operator, wherein the involved operator is a mobile virtual network operator, MVNO, or an operator that shares an operator network; and
a sending module (22), configured to: when the detection module detects that congestion occurs on one or more involved operators, send a congestion notification message to a core network device related to the involved operator on which congestion occurs, wherein the congestion notification message comprises an identifier of the involved operator on which congestion occurs and is used for the core network device to perform congestion control on the involved operator corresponding to the identifier of the involved operator.

8. The radio access network device according to claim 7, wherein the congestion notification message further comprises any one or a combination of the following:
a congestion cause of the involved operator on which congestion occurs, resource usage, in a congested cell, of the involved operator on which congestion occurs, information about another available cell of the RAN device or an adjacent RAN device of the RAN device, and resource usage, in the another available cell of the RAN device or the adjacent RAN device of the RAN device, of the involved operator corresponding to the identifier of the involved operator.

9. The radio access network device according to claim 8, wherein the core network device is an MME/SGSN, and the sending module (22) is configured to:
when the detection module detects that congestion occurs on the one or more involved operators, send the congestion notification message to the MME/SGSN related to the involved operator on which congestion occurs, so that the MME/SGSN records the congestion notification message, and performs, according to the congestion notification message, congestion control on the involved operator corresponding to the identifier of the involved operator; and
the radio access network device further comprises:
a first receiving module, configured to receive a congestion notification response message sent by the MME/SGSN.

10. The radio access network device according to claim 8, wherein the core network device comprises an MME/SGSN, an S-GW, a P-GW/GGSN, and a PCRF, and the sending module (22) is configured to:
when the detection module detects that congestion occurs on the one or more involved operators, send the congestion notification message to the MME/SGSN related to the involved operator on which congestion occurs, so that the MME/SGSN records the congestion notification message; and
the radio access network device further comprises:
a second receiving module, configured to receive a congestion notification response message sent by the MME/SGSN.

11. The radio access network device according to claim 8, wherein the core network device comprises an MME/SGSN, an S-GW, a P-GW/GGSN, and a PCRF, and the sending module (22) is configured to:
when the detection module detects that congestion occurs on the one or more involved operators, send the congestion notification message to the MME/SGSN related to the involved operator on which congestion occurs, so that the MME/SGSN sends a bearer update request message to the P-GW/GGSN by using the S-GW, wherein the bearer update request message comprises content of the congestion notification message; and
the radio access network device further comprises:
a third receiving module, configured to receive a congestion notification response message sent by the P-GW/GGSN by using the S-GW and the MME/SGSN.

12. The radio access network device according to claim 8, wherein the core network device comprises an S-GW, a P-GW/GGSN, and a PCRF, and the sending module (22) is configured to:
when the detection module detects that congestion occurs on the one or more involved operators, send the congestion notification message to the S-GW related to the involved operator on which congestion occurs, so that the S-GW sends the congestion notification message to the P-GW/GGSN; and
the radio access network device further comprises:
a fourth receiving module, configured to receive a congestion notification response message sent by the P-GW/GGSN by using the S-GW.

13. A communications system, comprising a core network device and a RAN device according to any one of claims 7 to 12, wherein the core network device comprises:
a receiving module (11), configured to receive a congestion notification message sent when the RAN device detects that congestion occurs on one or more involved operators, wherein the congestion notification message comprises an identifier of the involved operator on which congestion occurs, and the involved operator is a MVNO or an operator that shares an operator network; and
a processing module (12), configured to perform, according to the congestion notification message, congestion control on the involved operator corresponding to the identifier of the involved operator.

14. A computer-readable storage medium comprising a software functional unit stored thereon, wherein the software functional unit comprises instructions which, when executed by a processor of a radio access network, RAN, device, cause the processor to carry out the method of any of claims 1 to 6.

## Patentansprüche

1. Überlastungssteuerungsverfahren, **dadurch gekennzeichnet, dass** das Verfahren umfasst:
Erkennen (S201) durch eine Vorrichtung eines Funkzugangsnetzwerks, RAN, des Auftretens von Überlastung gemäß Ressourcennutzung eines betroffenen Betreibers, wobei der betroffene Betreiber ein virtueller Mobilfunknetzwerkbetreiber, MVNO, oder ein Betreiber ist, der ein Betreibernetzwerk teilt; und
Senden (S202) durch die RAN-Vorrichtung bei Erkennen, dass Überlastung bei einem oder mehreren betroffenen Betreibern auftritt, einer Überlastungsmeldungsnachricht an eine Kernnetzwerkvorrichtung, die mit dem betroffenen Betreiber in Beziehung steht, bei welchem Überlastung auftritt, wobei die Überlastungsmeldungsnachricht eine Kennung des betroffenen Betreibers umfasst, bei welchem Überlast auftritt, und verwendet wird, damit die Kernnetzwerkvorrichtung Überlastungssteuerung bei dem betroffenen Betreiber durchführt, welcher der Kennung des betroffenen Betreibers entspricht.

2. Verfahren nach Anspruch 1, wobei die Überlastungsmeldungsnachricht ferner ein beliebiges oder eine Kombination von Folgendem umfasst:
eine Überlastungsursache des betroffenen Betreibers, bei welchem Überlastung auftritt, Ressourcennutzung in einer überlasteten Zelle des betroffenen Betreibers, bei welchem Überlastung auftritt, Informationen über eine andere verfügbare Zelle der RAN-Vorrichtung oder einer benachbarten RAN-Vorrichtung der RAN-Vorrichtung und Ressourcennutzung in der anderen verfügbaren Zelle der RAN-Vorrichtung oder einer benachbarten RAN-Vorrichtung der RAN-Vorrichtung des betroffenen Betreibers, welcher der Kennung des betroffenen Betreibers entspricht.

3. Verfahren nach Anspruch 2, wobei die Kernnetzwerkvorrichtung ein versorgender Mobilitätsverwaltungsinstanz, MME/GPRS-Unterstützungsknoten, SGSN, ist, und das Senden (S202) durch die RAN-Vorrichtung bei Erkennen, dass Überlastung bei einem oder mehreren betroffenen Betreibern auftritt, einer Überlastungsmeldungsnachricht an eine Kernnetzwerkvorrichtung, die mit dem betroffenen Betreiber in Beziehung steht, bei welchem Überlastung auftritt, umfasst:
Senden durch die RAN-Vorrichtung bei Erkennen, dass Überlastung bei dem einen oder den mehreren betroffenen Betreibern auftritt, der Überlastungsmeldungsnachricht an den MME/SGSN, der mit dem betroffenen Betreiber in Beziehung steht, bei welchem Überlastung auftritt, damit der MME/SGSN die Überlastungsmeldungsnachricht aufzeichnet und Überlastungssteuerung bei dem betroffenen Betreiber, welcher der Kennung des betroffenen Betreibers entspricht, gemäß der Überlastungsmeldungsnachricht durchführt; und
wobei das Verfahren ferner umfasst: Empfangen durch die RAN-Vorrichtung einer vom MME/SGSN gesendeten Überlastungsmeldungsantwortnachricht.

4. Verfahren nach Anspruch 2, wobei die Kernnetzwerkvorrichtung einen MME/SGSN, ein versorgendes Gateway, S-GW, einen Paketdatennetzwerk-Gateway, P-GW/Gateway-GPRS-Unterstützungsknoten, GGSN, und eine Instanz mit Richtlinien- und Abrechnungsregelfunktion, PCRF, umfasst, und das Senden (S202) durch die RAN-Vorrichtung bei Erkennen, dass Überlastung bei einem oder mehreren betroffenen Betreibern auftritt, einer Überlastungsmeldungsnachricht an eine Kernnetzwerkvorrichtung, die mit dem betroffenen Betreiber in Beziehung steht, bei welchem Überlastung auftritt, umfasst:
Senden durch die RAN-Vorrichtung bei Erkennen, dass Überlastung bei dem einen oder den mehreren betroffenen Betreibern auftritt, der Überlastungsmeldungsnachricht an den MME/SGSN, der mit dem betroffenen Betreiber in Beziehung steht, bei welchem Überlastung auftritt, damit der MME/SGSN die Überlastungsmeldungsnachricht aufzeichnet; und
wobei das Verfahren ferner umfasst: Empfangen durch die RAN-Vorrichtung einer vom MME/SGSN gesendeten Überlastungsmeldungsantwortnachricht.

5. Verfahren nach Anspruch 2, wobei die Kernnetzwerkvorrichtung einen MME/SGSN, ein S-GW, einen P-GW/GGSN und eine PCRF umfasst, und das Senden (S202) durch die RAN-Vorrichtung bei Erkennen, dass Überlastung bei einem oder mehreren betroffenen Betreibern auftritt, einer Überlastungsmeldungsnachricht an eine Kernnetzwerkvorrichtung, die mit dem betroffenen Betreiber in Beziehung steht, bei welchem Überlastung auftritt, umfasst:
Senden durch die RAN-Vorrichtung bei Erkennen, dass Überlastung bei dem einen oder den mehreren betroffenen Betreibern auftritt, der Überlastungsmeldungsnachricht an den MME/SGSN, der mit dem betroffenen Betreiber in Beziehung steht, bei welchem Überlastung auftritt, damit der MME/SGSN eine Trägeraktualisierungsanforderungsnachricht durch Verwenden des S-GWs an den P-GW/GGSN sendet, wobei die Trägeraktualisierungsanforderungsnachricht Inhalt der Überlastungsmeldungsnachricht umfasst; und
wobei das Verfahren ferner umfasst:
Empfangen durch die RAN-Vorrichtung einer Überlastungsmeldungsantwortnachricht, die vom P-GW/GGSN durch Verwenden des S-GWs und des MME/SGSNs gesendet wird.

6. Verfahren nach Anspruch 2, wobei die Kernnetzwerkvorrichtung ein S-GW, einen P-GW/GGSN und eine PCRF umfasst, und das Senden (S202) durch die RAN-Vorrichtung bei Erkennen, dass Überlastung bei einem oder mehreren betroffenen Betreibern auftritt, einer Überlastungsmeldungsnachricht an eine Kernnetzwerkvorrichtung, die mit dem betroffenen Betreiber in Beziehung steht, bei welchem Überlastung auftritt, umfasst:
Senden durch die RAN-Vorrichtung bei Erkennen, dass Überlastung bei dem einen oder den mehreren betroffenen Betreibern auftritt, der Überlastungsmeldungsnachricht an das S-GW, das mit dem betroffenen Betreiber in Beziehung steht, bei welchem Überlastung auftritt, damit das S-GW die Überlastungsmeldungsnachricht an den P-GW/GGSN sendet; und
wobei das Verfahren ferner umfasst:
Empfangen durch die RAN-Vorrichtung einer Überlastungsmeldungsantwortnachricht, die vom P-GW/GGSN durch Verwenden des S-GWs gesendet wird.

7. Funkzugangsnetzwerkvorrichtung, **dadurch gekennzeichnet, dass** die Vorrichtung umfasst:
ein Erkennungsmodul (21), das zum Erkennen des Auftretens von Überlastung gemäß Ressourcennutzung eines betroffenen Betreibers konfiguriert ist, wobei der betroffene Betreiber ein virtueller Mobilfunknetzwerkbetreiber, MVNO, oder ein Betreiber ist, der ein Betreibernetzwerk teilt; und
ein Sendemodul (22), das konfiguriert ist zum: Senden, wenn das Erkennungsmodul erkennt, dass Überlastung bei einem oder mehreren betroffenen Betreibern auftritt, einer Überlastungsmeldungsnachricht an eine Kernnetzwerkvorrichtung, die mit dem betroffenen Betreiber in Beziehung steht, bei welchem Überlastung auftritt, wobei die Überlastungsmeldungsnachricht eine Kennung des betroffenen Betreibers umfasst, bei welchem die Überlast auftritt, und verwendet wird, damit die Kernnetzwerkvorrichtung Überlastungssteuerung bei dem betroffenen Betreiber durchführt, welcher der Kennung des betroffenen Betreibers entspricht.

8. Funkzugangsnetzwerkvorrichtung nach Anspruch 7, wobei die Überlastungsmeldungsnachricht ein beliebiges oder eine Kombination von Folgendem umfasst:
eine Überlastungsursache des betroffenen Betreiber,s bei welchem Überlastung auftritt, Ressourcennutzung in einer überlasteten Zelle des betroffenen Betreibers, bei welchem Überlastung auftritt, Informationen über eine andere verfügbare Zelle der RAN-Vorrichtung oder einer benachbarten RAN-Vorrichtung der RAN-Vorrichtung und Ressourcennutzung in der anderen verfügbaren Zelle der RAN-Vorrichtung oder einer benachbarten RAN-Vorrichtung der RAN-Vorrichtung des betroffenen Betreibers, welcher der Kennung des betroffenen Betreibers entspricht.

9. Funkzugangsnetzwerkvorrichtung nach Anspruch 8, wobei die Kernnetzwerkvorrichtung ein MME/SGSN ist, und das Sendemodul (22) konfiguriert ist zum:
Senden, wenn das Erkennungsmodul erkennt, dass Überlastung bei dem einen oder den mehreren betroffenen Betreibern auftritt, der Überlastungsmeldungsnachricht an den MME/SGSN, der mit dem betroffenen Betreiber in Beziehung steht, bei welchem Überlastung auftritt, damit der MME/SGSN die Überlastungsmeldungsnachricht aufzeichnet und Überlastungssteuerung bei dem betroffenen Betreiber, welcher der Kennung des betroffenen Betreibers entspricht, gemäß der Überlastungsmeldungsnachricht durchführt; und
wobei die Funkzugangsnetzwerkvorrichtung ferner umfasst;
eine erstes Empfangsmodul, das zum Empfangen einer vom MME/SGSN gesendeten Überlastungsmeldungsantwortnachricht konfiguriert ist.

10. Funkzugangsnetzwerkvorrichtung nach Anspruch 8, wobei die Kernnetzwerkvorrichtung einen MME/SGSN, ein S-GW, einen P-GW/GGSN und eine PCRF umfasst, und das Sendemodul (22) konfiguriert ist zum:
Senden, wenn das Erkennungsmodul erkennt, dass Überlastung bei dem einen oder den mehreren betroffenen Betreibern auftritt, der Überlastungsmeldungsnachricht an den MME/SGSN, der mit dem betroffenen Betreiber in Beziehung steht, bei welchem Überlastung auftritt, damit der MME/SGSN die Überlastungsmeldungsnachricht aufzeichnet; und
wobei die Funkzugangsnetzwerkvorrichtung ferner umfasst;
eine zweites Empfangsmodul, das zum Empfangen einer vom MME/SGSN gesendeten Überlastungsmeldungsantwortnachricht konfiguriert ist.

11. Funkzugangsnetzwerkvorrichtung nach Anspruch 8, wobei die Kernnetzwerkvorrichtung einen MME/SGSN, ein S-GW, einen P-GW/GGSN und eine PCRF umfasst, und das Sendemodul (22) konfiguriert ist zum:
Senden, wenn das Erkennungsmodul erkennt, dass Überlastung bei dem einen oder den mehreren betroffenen Betreibern auftritt, der Überlastungsmeldungsnachricht an den MME/SGSN, der mit dem betroffenen Betreiber in Beziehung steht, bei welchem Überlastung auftritt, damit der MME/SGSN eine Trägeraktualisierungsanforderungsnachricht durch Verwenden des S-GWs an den P-GW/GGSN sendet, wobei die Trägeraktualisierungsanforderungsnachricht Inhalt der Überlastungsmeldungsnachricht umfasst; und
wobei die Funkzugangsnetzwerkvorrichtung ferner umfasst;
ein drittes Empfangsmodul, das zum Empfangen einer Überlastungsmeldungsantwortnachricht konfiguriert ist, die vom P-GW/GGSN durch Verwenden des S-GWs und des MME/SGSNs gesendet wird.

12. Funkzugangsnetzwerkvorrichtung nach Anspruch 8, wobei die Kernnetzwerkvorrichtung ein S-GW, einen P-GW/GGSN und eine PCRF umfasst, und das Sendemodul (22) konfiguriert ist zum:
Senden, wenn das Erkennungsmodul erkennt, dass Überlastung bei dem einen oder den mehreren betroffenen Betreibern auftritt, der Überlastungsmeldungsnachricht an das S-GW, das mit dem betroffenen Betreiber in Beziehung steht, bei welchem Überlastung auftritt, damit das S-GW die Überlastungsmeldungsnachricht an den P-GW/GGSN sendet; und
wobei die Funkzugangsnetzwerkvorrichtung ferner umfasst;
ein viertes Empfangsmodul, das zum Empfangen einer Überlastungsmeldungsantwortnachricht konfiguriert ist, die vom P-GW/GGSN durch Verwenden des S-GWs gesendet wird.

13. Kommunikationssystem, umfassend eine Kernnetzwerkvorrichtung und eine RAN-Vorrichtung nach einem der Ansprüche 7 bis 12, wobei die Kernnetzwerkvorrichtung umfasst:
ein Empfangsmodul (11), das zum Empfangen einer Überlastungsmeldungsnachricht konfiguriert ist, die gesendet wird, wenn die RAN-Vorrichtung erkennt, dass Überlastung bei einem oder mehreren Betreibern auftritt, wobei die Überlastungsmeldungsnachricht eine Kennung des betroffenen Betreibers umfasst, bei welchem Überlastung auftritt, und der betroffene Betreiber ein MVNO oder ein Betreiber ist, der ein Betreibernetzwerk teilt; und
ein Verarbeitungsmodul (12), das so konfiguriert ist, dass es Überlastungssteuerung bei dem betroffenen Betreiber, welcher der Kennung des betroffenen Betreibers entspricht, gemäß der Überlastungsmeldungsnachricht durchführt.

14. Computerlesbares Speichermedium, umfassend eine darauf gespeicherte Software-Funktionseinheit, wobei die Software-Funktionseinheit Anweisungen umfasst, die bei Ausführung durch einen Prozessor einer Vorrichtung eines Funkzugangsnetzwerks, RAN, den Prozessor zum Ausführen des Verfahrens nach einem der Ansprüche 1 bis 6 veranlassen.

## Revendications

1. Procédé de régulation de l'encombrement, **caractérisé en ce qu'**il comprend les étapes suivantes :
détecter (S201), par un dispositif de réseau d'accès radio, RAN, l'apparition d'un encombrement selon une utilisation de ressource d'un opérateur concerné, l'opérateur concerné étant un opérateur de réseau virtuel mobile, MVNO, ou un opérateur qui partage un réseau d'opérateur ; et
envoyer (S202), par le dispositif RAN lors de la détection qu'un encombrement a lieu sur un ou plusieurs opérateurs concernés, un message de notification d'encombrement à un dispositif de réseau central associé à l'opérateur concerné sur lequel un encombrement a lieu, le message de notification d'encombrement comportant un identifiant de l'opérateur concerné sur lequel un encombrement a lieu et étant utilisé pour que le dispositif de réseau central exécute une régulation de l'encombrement sur l'opérateur concerné correspondant à l'identifiant de l'opérateur concerné.

2. Procédé selon la revendication 1, dans lequel le message de notification d'encombrement comprend en outre un élément quelconque ou une combinaison des éléments suivants :
une cause d'encombrement de l'opérateur concerné sur lequel un encombrement a lieu, une utilisation de ressource, dans une cellule encombrée, de l'opérateur concerné sur lequel un encombrement a lieu, des informations concernant une autre cellule disponible du dispositif RAN ou d'un dispositif RAN adjacent du dispositif RAN, et une utilisation de ressource, dans ladite autre cellule disponible du dispositif RAN ou du dispositif RAN adjacent du dispositif RAN, de l'opérateur concerné correspondant à l'identifiant de l'opérateur concerné.

3. Procédé selon la revendication 2, dans lequel le dispositif de réseau central est une entité de gestion de la mobilité, MME / un nœud de support GPRS de desserte, SGSN, et l'étape d'envoi (S202), par le dispositif RAN lors de la détection qu'un encombrement a lieu sur un ou plusieurs opérateurs concernés, d'un message de notification d'encombrement à un dispositif de réseau central associé à l'opérateur concerné sur lequel un encombrement a lieu comprend :
envoyer, par le dispositif RAN lors de la détection qu'un encombrement a lieu sur les un ou plusieurs opérateurs concernés, le message de notification d'encombrement au MME/SGSN associé à l'opérateur concerné sur lequel un encombrement a lieu, pour que le MME/SGSN enregistre le message de notification d'encombrement, et exécute, selon le message de notification d'encombrement, une régulation de l'encombrement sur l'opérateur concerné correspondant à l'identifiant de l'opérateur concerné ; et
le procédé comprend en outre : recevoir par le dispositif RAN, un message de réponse de notification d'encombrement envoyé par le MME/SGSN.

4. Procédé selon la revendication 2, dans lequel le dispositif de réseau central comprend un MME/SGSN, une passerelle de desserte, S-GW, une passerelle de réseau de données par paquets, P-GW / un nœud de support GPRS de passerelle, GGSN, et une entité de fonction de règles de politique et de facturation PCRF, et l'étape d'envoi (S202), par le dispositif RAN lors de la détection qu'un encombrement a lieu sur un ou plusieurs opérateurs concernés, d'un message de notification d'encombrement à un dispositif de réseau central associé à l'opérateur concerné sur lequel un encombrement a lieu comprend :
envoyer, par le dispositif RAN lors de la détection qu'un encombrement a lieu sur les un ou plusieurs opérateurs concernés, le message de notification d'encombrement au MME/SGSN associé à l'opérateur concerné sur lequel un encombrement a lieu, pour que le MME/SGSN enregistre le message de notification d'encombrement ; et
le procédé comprend en outre : recevoir, par le dispositif RAN, un message de réponse de notification d'encombrement envoyé par le MME/SGSN.

5. Procédé selon la revendication 2, dans lequel le dispositif de réseau central comprend un MME/SGSN, un S-GW, un P-GW/GGSN, et un PCRF, et l'étape d'envoi (S202), par le dispositif RAN lors de la détection qu'un encombrement a lieu sur un ou plusieurs opérateurs concernés, d'un message de notification d'encombrement à un dispositif de réseau central associé à l'opérateur concerné sur lequel un encombrement a lieu comprend :
envoyer, par le dispositif RAN lors de la détection qu'un encombrement a lieu sur les un ou plusieurs opérateurs concernés, le message de notification d'encombrement au MME/SGSN associé à l'opérateur concerné sur lequel un encombrement a lieu, pour que le MME/SGSN envoie un message de requête de mise à jour de support au P-GW/GGSN en utilisant le S-GW, le message de requête de mise à jour de support comportant le contenu du message de notification d'encombrement ; et
le procédé comprenant en outre :
recevoir, par le dispositif RAN, un message de réponse de notification d'encombrement envoyé par le P-GW/GGSN en utilisant le S-GW et le MME/SGSN.

6. Procédé selon la revendication 2, dans lequel le dispositif de réseau central comprend un S-GW, un P-GW/GGSN, et un PCRF, et l'étape d'envoi (S202), par le dispositif RAN lors de la détection qu'un encombrement a lieu sur un ou plusieurs opérateurs concernés, d'un message de notification d'encombrement à un dispositif de réseau central associé à l'opérateur concerné sur lequel un encombrement a lieu comprend :
envoyer, par le dispositif RAN lors de la détection qu'un encombrement a lieu sur les un ou plusieurs opérateurs concernés, le message de notification d'encombrement au S-GW associé à l'opérateur concerné sur lequel un encombrement a lieu, pour que le S-GW envoie le message de notification d'encombrement au P-GW/GGSN ; et
le procédé comprend en outre :
recevoir, par le dispositif RAN, un message de réponse de notification d'encombrement envoyé par le P-GW/GGSN en utilisant le S-GW.

7. Dispositif de réseau d'accès radio, **caractérisé en ce que** le dispositif comprend :
un module de détection (21), configuré pour détecter l'apparition d'un encombrement selon une utilisation de ressource d'un opérateur concerné, l'opérateur concerné étant un opérateur de réseau virtuel mobile, MVNO, ou un opérateur qui partage un réseau d'opérateur ; et
un module d'envoi (22), configuré pour : lorsque le module de détection détecte qu'un encombrement a lieu sur un ou plusieurs opérateurs concernés, envoyer un message de notification d'encombrement à un dispositif de réseau central associé à l'opérateur concerné sur lequel un encombrement a lieu, le message de notification d'encombrement comportant un identifiant de l'opérateur concerné sur lequel un encombrement a lieu et étant utilisé pour que le dispositif de réseau central exécute une régulation de l'encombrement sur l'opérateur concerné correspondant à l'identifiant de l'opérateur concerné.

8. Dispositif de réseau d'accès radio selon la revendication 7, dans lequel le message de notification d'encombrement comprend en outre un élément quelconque ou une combinaison des éléments suivants :
une cause d'encombrement de l'opérateur concerné sur lequel un encombrement a lieu, une utilisation de ressource, dans une cellule encombrée, de l'opérateur concerné sur lequel un encombrement a lieu, des informations concernant une autre cellule disponible du dispositif RAN ou d'un dispositif RAN adjacent du dispositif RAN, et une utilisation de ressource, dans ladite autre cellule disponible du dispositif RAN ou du dispositif RAN adjacent du dispositif RAN, de l'opérateur concerné correspondant à l'identifiant de l'opérateur concerné.

9. Dispositif de réseau d'accès radio selon la revendication 8, dans lequel le dispositif de réseau central est un MME/SGSN, et le module d'envoi (22) est configuré pour :
lorsque le module de détection détecte qu'un encombrement a lieu sur les un ou plusieurs opérateurs concernés, envoyer le message de notification d'encombrement au MME/SGSN associé à l'opérateur concerné sur lequel un encombrement a lieu, pour que le MME/SGSN enregistre le message de notification d'encombrement, et exécute, selon le message de notification d'encombrement, une régulation de l'encombrement sur l'opérateur concerné correspondant à l'identifiant de l'opérateur concerné ; et
le dispositif de réseau d'accès radio comprend en outre :
un premier module de réception, configuré pour recevoir un message de réponse de notification d'encombrement envoyé par le MME/SGSN.

10. Dispositif de réseau d'accès radio selon la revendication 8, dans lequel le dispositif de réseau central comprend un MME/SGSN, un S-GW, un P-GW/GGSN, et un PCRF, et le module d'envoi (22) est configuré pour :
lorsque le module de détection détecte qu'un encombrement a lieu sur les un ou plusieurs opérateurs concernés, envoyer le message de notification d'encombrement au MME/SGSN associé à l'opérateur concerné sur lequel un encombrement a lieu, pour que le MME/SGSN enregistre le message de notification d'encombrement ; et
le dispositif de réseau d'accès radio comprend en outre :
un deuxième module de réception, configuré pour recevoir un message de réponse de notification d'encombrement envoyé par le MME/SGSN.

11. Dispositif de réseau d'accès radio selon la revendication 8, dans lequel le dispositif de réseau central comprend un MME/SGSN, un S-GW, un P-GW/GGSN, et un PCRF, et le module d'envoi (22) est configuré pour :
lorsque le module de détection détecte qu'un encombrement a lieu sur les un ou plusieurs opérateurs concernés, envoyer le message de notification d'encombrement au MME/SGSN associé à l'opérateur concerné sur lequel un encombrement a lieu, pour que le MME/SGSN envoie un message de requête de mise à jour de support au P-GW/GGSN en utilisant le S-GW, le message de requête de mise à jour de support comportant le contenu du message de notification d'encombrement ; et
le dispositif de réseau d'accès radio comprend en outre :
un troisième module de réception, configuré pour recevoir un message de réponse de notification d'encombrement envoyé par le P-GW/GGSN en utilisant le S-GW et le MME/SGSN.

12. Dispositif de réseau d'accès radio selon la revendication 8, dans lequel le dispositif de réseau central comprend un S-GW, un P-GW/GGSN, et un PCRF, et le module d'envoi (22) est configuré pour :
lorsque le module de détection détecte qu'un encombrement a lieu sur les un ou plusieurs opérateurs concernés, envoyer le message de notification d'encombrement au S-GW associé à l'opérateur concerné sur lequel un encombrement a lieu, pour que le S-GW envoie le message de notification d'encombrement au P-GW/GGSN ; et
le dispositif de réseau d'accès radio comprend en outre :
un quatrième module de réception, configuré pour recevoir un message de réponse de notification d'encombrement envoyé par le P-GW/GGSN en utilisant le S-GW.

13. Système de communication, comprenant un dispositif de réseau central et un dispositif RAN selon l'une quelconque des revendications 7 à 12, dans lequel le dispositif de réseau central comprend :
un module de réception (11), configuré pour recevoir un message de notification d'encombrement envoyé lorsque le dispositif RAN détecte qu'un encombrement a lieu sur un ou plusieurs opérateurs concernés, le message de notification d'encombrement comportant un identifiant de l'opérateur concerné sur lequel un encombrement a lieu, et l'opérateur concerné étant un MVNO ou un opérateur qui partage un réseau d'opérateur ; et
un module de traitement (12), configuré pour exécuter, selon le message de notification d'encombrement, une régulation de l'encombrement sur l'opérateur concerné correspondant à l'identifiant de l'opérateur concerné.

14. Support de stockage lisible par ordinateur comprenant une unité fonctionnelle logicielle, dans lequel l'unité fonctionnelle logicielle comprend des instructions qui, lorsqu'elles sont exécutées par un processeur d'un dispositif réseau d'accès radio, RAN, amènent le processeur à mettre en œuvre le procédé de l'une quelconque des revendications 1 à 6.
